# EUROPÄISCHE PATENTANMELDUNG

(11) **EP 3 967 472 A1**
(43) Veröffentlichungstag der Anmeldung: **16.03.2022**
(21) Anmeldenummer: 20195861.8
(22) Anmeldetag: 11.09.2020
(51) Int. Cl.: B29C 45/17, B65B 35/30, B29C 45/42, B65B 35/18, B65B 35/38, B01L 9/00

(54) **VERFAHREN UND VORRICHTUNG ZUM VERPACKEN VON SPRITZGUSSTEILEN**

(71) Anmelder: Gritec AG, 7214 Grüsch (CH)
(72) Erfinder: Hess, Peter, 5628 Aristau (CH); Ratz, Andres, 7220 Schiers (CH); Wenzin, Placi, 8880 Walenstadt (CH)
(74) Vertreter: Dr. Graf & Partner AG

(57) **Zusammenfassung**

Verfahren zum Umsetzen von Spritzgussteilen, insbesondere Pipettenspitzen, aus einer Spritzgiessmaschine in Verpackungsbehälter, umfassend die Schritte gleichzeitige Entnahme von K Spritzgussteilen aus K Kavitäten eines Werkzeugs der Spritzgiessmaschine in Werkzeugordnung durch einen Entnahmegreifer ; gleichzeitige Ablage der K Spritzgussteile in wenigstens einen Werkstückträger durch den Entnahmegreifer; gleichzeitige Aufnahme mindestens eines, vorzugsweise einer Mehrzahl von Spritzgussteilen aus dem wenigstens einen Werkstückträger durch zumindest einen Kombinationsgreifer; wobei die durch das Werkzeug der Spritzgiessmaschine vorgegebene Werkzeugordnung der K Spritzgussteile durch den Entnahmegreifer nicht verändert wird, wobei der zumindest eine Kombinationsgreifer die jeweils aufgenommenen Spritzgussteile beim Befüllen der Verpackungsbehälter vereinzelt, und wobei K eine natürliche Zahl grösser oder gleich 2 ist.

## Beschreibung

Die Erfindung betrifft ein Verfahren zum Umsetzen von Spritzgussteilen, eine Verpackungsvorrichtung, einen Werkstückträger und einen Kombinationsgreifer für eine Verpackungsvorrichtung, sowie eine Spritzgiessanlage umfassend einen Kombinationsgreifer. Die Erfindung betrifft weiter eine Vorrichtung zum Bestücken von Spritzgussteilen, insbesondere Pipettenspitzen, mit Filterelementen sowie eine Vorrichtung zum Bereitstellen, Befüllen und Weiterleiten von Verpackungsbehältern.

Aus der Druckschrift WO 2015/049350 A1 ist ein Verfahren und eine Vorrichtung zum Verpacken von Spritzgussteilen bekannt. Das darin offenbarte Verfahren umfasst einen Verfahrensschritt, in dem aus dem Werkzeug einer Spritzgiessmaschine entnommene Spritzgussteile von einer ringförmigen Anordnung in einer Reihenanordnung überführt werden. Die für diesen Zweck verwendete Transferstation wird ferner dazu verwendet, um den Abstand der in Reihenanordnung überführten Spritzgussteile zueinander entsprechend der Aufnahmen eines Werkstückträgers einzustellen, bevor das eigentliche Umsetzen der Spritzgussteile in Verpackungsbehälter erfolgen kann. Die zur Durchführung eines derartigen Verfahrens verwendete Vorrichtung sowie das Verfahren selbst weisen jedoch den Nachteil auf, dass die Verpackung der Spritzgussteile durch die beschriebenen, häufigen Änderungen der Spritzgussteilanordnung erheblich verkompliziert wird. Die zusätzlich benötigten Verfahrensschritte und Einrichtungen stellen ausserdem potentielle Störquellen dar. Zudem können die Spritzgussteile in diesem Verfahren nur stichprobenartig geprüft werden, was dazu führt, dass oftmals komplett befüllte Verpackungsbehälter entsorgt werden müssen.

Ausgehend von dem genannten Stand der Technik liegt der vorliegenden Erfindung die Aufgabe zugrunde, solche und weitere Nachteile des Standes der Technik zu beheben und insbesondere vorteilhafteres Verfahren sowie eine vorteilhaftere Verpackungsvorrichtung anzugeben, durch die das Umsetzen von Spritzgussteilen, insbesondere von Pipettenspitzen, aus einer Spritzgiessmaschine in Verpackungsbehälter schnell, effizient und unter Vermeidung von hohen Ausschusszahlen verwirklich wird.

Die Aufgabe wird gelöst durch ein Verfahren zum Umsetzen von Spritzgussteilen, eine Verpackungsvorrichtung, einen Werkstückträger und einen Kombinationsgreifer für eine erfindungsgemässe Verpackungsvorrichtung, eine Spritzgiessanlage umfassend einen erfindungsgemässen Kombinationsgreifer, eine Vorrichtung zum Bestücken von Spritzgussteilen mit Filterelementen, sowie eine Vorrichtung zum Bereitstellen, Befüllen und Weiterleiten von Verpackungsbehältern gemäss den unabhängigen Patentansprüchen. Weitere, vorteilhafte Ausführungsformen sind Gegenstand der abhängigen Patentansprüche.

Insbesondere wird die Aufgabe durch ein Verfahren zum Umsetzen von Spritzgussteilen, insbesondere Pipettenspitzen, aus einer Spritzgiessmaschine in Verpackungsbehälter gelöst, wobei das erfindungsgemässe Verfahren die folgenden Schritte umfasst: Gleichzeitige Entnahme von K Spritzgussteilen aus K Kavitäten eines Werkzeugs der Spritzgiessmaschine in Werkzeugordnung durch einen Entnahmegreifer; Gleichzeitige Ablage der K Spritzgussteile in wenigstens einen Werkstückträger durch den Entnahmegreifer; Gleichzeitige Aufnahme mindestens eines, vorzugsweise einer Mehrzahl von Spritzgussteilen aus dem wenigstens einen Werkstückträger durch zumindest einen Kombinationsgreifer. Erfindungsgemäss wird die durch das Werkzeug der Spritzgiessmaschine vorgegebene Werkzeugordnung der K Spritzgussteile durch den Entnahmegreifer nicht verändert. Ferner vereinzelt der zumindest eine Kombinationsgreifer die jeweils aufgenommenen Spritzgussteile beim Befüllen der Verpackungsbehälter. K ist dabei eine natürliche Zahl, welche grösser oder gleich 2 ist.

Im Rahmen der vorliegenden Erfindung wird unter dem Begriff Werkzeugordnung die Anordnung der Spritzgussteile-erzeugenden Kavitäten im Werkzeug einer Spritzgiessmaschine verstanden.

Das erfindungsgemässe Verfahren ermöglicht eine besonders effiziente und sichere Verpackung von Spritzgussteilen, da die Anordnung der Spritzgussteile aus dem Werkzeug der Spritzgiessmaschine bis zum Zeitpunkt der Befüllung der Verpackungsbehälter beibehalten wird. Dies wird insbesondere durch die Kombination aus erfindungsgemässen Werkstückträgern und Kombinationsgreifern ermöglicht, wie nachfolgend noch näher erläutert wird.

Bevorzugt werden die K Spritzgussteile eines Schusses der Spritzgussmaschine auf mehrere Werkstückträger, bevorzugt auf eine gerade Anzahl an Werkstückträgern, verteilt, wobei jeder Werkstückträger eine Untergruppe von U Spritzgussteilen erhält.

In einer bevorzugten Ausführungsform des erfindungsgemässen Verfahrens werden die K Spritzgussteile bei der gleichzeitigen Ablage durch den Entnahmegreifer auf mehrere getrennte Werkstückträger verteilt. Dabei erhält jeder Werkstückträger eine Untergruppe von U Spritzgussteilen. Der zumindest eine Kombinationsgreifer nimmt jeweils eine Untergruppe von U Spritzgussteilen aus einem der Werkstückträger auf und vereinzelt diese beim Befüllen der Verpackungsbehälter. Nachdem sämtliche Spritzgussteile der durch den Kombinationsgreifer aufgenommenen Untergruppe U in den oder die Verpackungsbehälter abgesetzt wurden, ist der Kombinationsgreifer zur Aufnahme einer weiteren Untergruppe U an Spritzgussteilen aus einem weiteren Werkstückträger bereit. K ist dabei eine natürliche Zahl, welche ein Vielfaches von U ist.

Durch die Aufteilung der Spritzgussteile auf mehrere Werkstückträger wird die Zuverlässigkeit des Verfahrens gesteigert und beispielsweise ausserdem ermöglicht, dass einige oder alle Werkstückträger die verschiedenen Einrichtungen der erfindungsgemässen Verpackungsvorrichtung in unterschiedlicher Reihenfolge durchlaufen. Damit kann die Anlagenauslastung erhöht und die Effizienz des Verpackungsverfahrens gesteigert werden.

Bevorzugt entspricht die Anzahl der zur Aufnahme von K Spritzgussteilen benötigten Werkstückträger der Anzahl der im Verfahren verwendeten Kombinationsgreifer. Hierdurch wird eine besonders schnelle Überführung der Spritzgussteile in die dafür bereitgestellten Verpackungsbehälter ermöglicht.

In einer bevorzugten Ausführungsform des erfindungsgemässen Verfahrens werden Spritzgussteile aus bestimmten Kavitäten des Werkzeugs der Spritzgiessmaschine in einen Verpackungsbehälter abgefüllt. Somit lassen sich bestimmte Zusammenstellungen verschiedener Spritzgussteile in einem Verpackungsbehälter realisieren, beispielsweise verschieden grosse Pipettenspitzen in einem einzigen dafür ausgebildeten Pipettenspitzenhalter.

Besonders bevorzugt werden jeweils Spritzgussteile aus nur einer Kavität des Werkzeugs der Spritzgiessmaschine in einen Verpackungsbehälter abgefüllt. Durch diese Ausführungsform des Verfahrens wird eine kavitätenreine Befüllung der Verpackungsbehälter mit Spritzgussteilen erreicht. Insbesondere wird durch das Vermeiden der Zusammenfuhr von in verschiedenen Kavitäten eines Spritzgusswerkzeuges hergestellten Spritzgutteilen in ein und denselben Verpackungsbehälter vermieden, dass beim Auftreten eines Problems betreffend die Spritzgussteile einer bestimmten Kavität komplette Verpackungsbehälter mit fehlerhaften Spritzgussteilen verunreinigt und in der Folge nachträglich komplett entsorgt werden müssen, wie es im Stand der Technik üblich ist.

In einer bevorzugten Ausführungsform des erfindungsgemässen Verfahrens ist jedes Spritzgussteil einer Kavitätennummer der Spritzgussmaschine zugeordnet, wobei die Spritzgussteile durch den Kombinationsgreifer kavitätenrein in Verpackungsbehälter abgelegt werden. Dazu ist in jedem Werkstückträger ein vorherbestimmter Bereich an Kavitätennummern gespeichert. Jedem Kombinationsgreifer sind Verpackungsbehälter mit einem Bereich an Kavitätennummern zugeordnet. Ein jeweiliger Werkstückträger wird demjenigen Kombinationsgreifer zugeführt, deren Bereich an Kavitätennummern übereinstimmen.

In einer bevorzugten Ausführungsform des erfindungsgemässen Verfahrens wird die Abweichung eines Spritzgussteils, insbesondere eines langgestreckten Spritzgussteils wie einer Pipettenspitze, von einer Norm mittels einer Messeinrichtung beurteilt. Dazu wird das zu prüfende Spritzgussteil zur Beurteilung der Normabweichung von dem Kombinationsgreifer gehaltert und vorzugsweise rotiert. Eine Normabweichung des Spritzgussteils wird als Lageabweichung eines vorbestimmten Bereichs des Spritzgussteils von einer vordefinierten Solllage des Bereichs des Spritzgussteils gemessen. Anders ausgedrückt wird der Verzug eines zu prüfenden Spritzgussteils also durch Vergleich mit einem zuvor gemessenen, nichtverzogenen Spritzgussteil gemessen.

Bevorzugt handelt es sich bei der Messeinrichtung um eine optische Messeinrichtung, beispielsweise eine Kamera.

Beispielsweise handelt es sich bei einer Abweichung eines Spritzgussteils von einer Norm um einen Verzug des Spritzgussteils bzw. um eine Abweichung des Spritzgussteils von einer gewünschten Form.

Die Prüfung bezüglich der Geradheit der Spritzgussteile ist insbesondere bei Pipettenspitzen wichtig und nur durchführbar, wenn die Pipettenspitzen einzeln kontrolliert werden. Ohne Bindung an diese Theorie wird derzeit davon ausgegangen, dass das Auftreten von Verzug bei der Herstellung von Pipettenspitzen ein schleichender Prozess ist, welcher unter anderem mit der Wärmeverteilung bzw. mit einer Änderung der Wärmeverteilung im Spritzgusswerkzeug zusammenhängt.

Zur Verbesserung der Qualitätskontrolle von produzierten Spritzgussteilen ist es bevorzugt, dass sämtliche Spritzgussteile vor dem Befüllen der Verpackungsbehälter einen Prüfschritt zur Feststellung von Abweichungen der Spritzgussteile von einem vordefinierten Wert durchlaufen.

Mit Hilfe des erfindungsgemässen Kombinationsgreifers lassen sich die vom Kombinationsgreifer aufgenommenen Pipettenspitzen jeweils einzeln um die Rotationsachse der Pipettenspitzen drehen, wobei lediglich eine Kamera zur Beurteilung der Geradheit der Pipetten benötigt wird, wie nachfolgend noch näher erläutert wird. Dadurch werden Kosten gespart. Durch die Einzelkontrolle jeder Pipettenspitze wird zudem das Problem gelöst, dass fehlerhafte Pipettenspitzen in den Verpackungsbehälter gelangen und bereits abgepackte, komplett gefüllte Pipettenspitzenhalter entsorgt werden müssen. Derartige Pipettenspitzenhalter sind auch unter dem Begriff *Rack* bekannt. Stattdessen können fehlerhafte Pipettenspitzen bereits vorher aussortiert werden, beispielsweise durch Abwurf dieser fehlerhaften Pipettenspitzen in einen für Ausschussteile vorgesehenen Behälter durch den Kombinationsgreifer. Somit werden nur Spritzgussteile, welche die im jeweiligen Einzelfall vordefinierten Qualitätsanforderungen erfüllen, durch den oder die Kombinationsgreifer in Verpackungsbehälter überführt.

Durch die ständige Kontrolle der Qualität jedes einzelnen Spritzgussteils kann das System, beispielsweise über eine Steuerungseinrichtung, automatisch herausfinden, welche Kavität Probleme bereitet, und die betroffene Kavität oder die betroffenen Kavitäten danach abwählen.

Bei einer *abgewählten Kavität* handelt es sich um eine Kavität des Spritzgusswerkzeugs, bei der in Folge der Kavitätenabwahl sämtliche darin produzierte Spritzgussteile als Ausschuss angesehen werden. Ohne sich auf diese Erklärung beschränken zu wollen wird davon ausgegangen, dass das Spritzgiessen dieser Kavität nicht einfach gestoppt werden kann, da der thermische Haushalt des Spritzgusswerkzeuges ansonsten zu stark durcheinandergeraten würde.

In einer bevorzugten Ausführungsform des erfindungsgemässen Verfahrens werden die festgestellten Abweichungen durch eine Steuerungseinrichtung registriert und den Kavitäten des Werkzeugs der Spritzgiessmaschine zugeordnet. Dies ist möglich, weil die Anordnung der Spritzgussteile in den Werkstückträgern identisch ist mit der Anordnung der Spritzgussteile im Spritzgusswerkzeug und weil der Kombinationsgreifer die Spritzgussteile in dieser Werkzeugordnung aus dem Werkstückträger aufnimmt und einzeln einem Prüfschritt zuführen kann. Wird festgestellt, dass die Spritzgussteile aus einer Kavität einen vordefinierten Ausschusswert überschreiten, wählt die Steuerungseinrichtung die betroffene Kavität ab und/oder unterbricht die Steuerungseinrichtung die Produktion der Spritzgiessmaschine.

Durch Verwenden einer Steuerungseinrichtung kann die Anlagenautonomie erhöht werden.

In einer bevorzugten Ausführungsform des erfindungsgemässen Verfahrens werden Spritzgussteile aus abgewählten Kavitäten nach dem Spritzen verworfen. Dadurch können Störungen, die während dem Sortieren und Prüfen der Spritzgussteile aus der abgewählten Kavität vermehrt auftreten würden, verhindert werden.

Bevorzugt werden die Spritzgussteile aus abgewählten Kavitäten bereits vor der Entnahme der Spritzgussteile durch den Entnahmegreifer verworfen. Das Herausnehmen dieser Spritzgussteile aus dem Strom hergestellter Spritzgussteile bzw. aus dem Verpackungsverfahren bereits sehr schnell nach dem Spritzgiessen bringt den Vorteil, dass die nachfolgenden Einrichtungen der Verpackungsanlage nicht mit fehlerhaften und potentiell Störquellen darstellenden Spritzgussteilen belastet werden, wodurch letztlich die Zuverlässigkeit der Verpackung erhöht wird.

Die Aufgabe wird weiter gelöst durch eine Verpackungsvorrichtung, insbesondere zur Durchführung eines Verfahrens zum Umsetzen von Spritzgussteilen aus einer Spritzgiessmaschine in Verpackungsbehälter wie hier beschrieben.

Insbesondere wird die Aufgabe gelöst durch eine Verpackungsvorrichtung umfassend einen Entnahmegreifer mit mehreren Greifern für Spritzgussteile, wobei die Greifer entsprechend der Anordnung der Kavitäten eines Werkzeugs einer Spritzgiessmaschine am Entnahmegreifer angeordnet sind, d.h. in Werkzeugordnung. Ferner umfasst eine erfindungsgemässe Verpackungsvorrichtung wenigstens einen Werkstückträger, der zur gleichzeitigen Aufnahme einer Mehrzahl von Spritzgussteilen in Werkzeugordnung ausgebildet ist, sowie zumindest einen Kombinationsgreifer, der zur gleichzeitigen Aufnahme zumindest eines Spritzgussteils und zur Vereinzelung der aufgenommenen Spritzgussteile in Verpackungsbehälter ausgebildet ist. Vorzugsweise ist der zumindest eine Kombinationsgreifer zur gleichzeitigen Aufnahme einer Mehrzahl von Spritzgussteilen und zur Vereinzelung der aufgenommenen Spritzgussteile in Verpackungsbehälter ausgebildet. Erfindungsgemäss umfasst die Verpackungsvorrichtung ferner eine Steuerungseinrichtung. Insbesondere weist die Steuerungseinrichtung zumindest eine Schnittstelle zum Datentransfer mit zumindest einer Einrichtung der Verpackungsvorrichtung, beispielsweise mit einer Messeinrichtung, auf.

Eine derartige Verpackungsvorrichtung ermöglicht ein Aufteilen und Verteilen von Material- und Produktströmen zur effizienten Versorgung der verschiedenen Einrichtungen der Verpackungsvorrichtung mit Spritzgussteilen. Im Falle der Herstellung und Verpackung von Pipettenspitzen ist es erfindungsgemäss möglich, die Produktion von Pipettenspitzen und/oder Pipettenspitzenbehältern aus mehreren Spritzgiessmaschinen abzustimmen und derart zu automatisieren, dass die erfindungsgemässe Vorrichtung über einen längeren Zeitraum autark und Produktionsstaus oder Produktionsunterbrechungen betrieben werden kann.

Eine bevorzugte Ausführungsform der erfindungsgemässen Verpackungsvorrichtung umfasst ferner zumindest eine Messeinrichtung, insbesondere eine optische Messeinrichtung, beispielsweise eine Kamera, zur Beurteilung des Verzugs eines Spritzgussteils. Bei dem Spritzgussteil handelt es sich insbesondere um ein langgestrecktes Spritzgussteil wie einer Pipettenspitze. Somit wird eine ständige Kontrolle der Qualität und die automatische Abwahl von Kavitäten ermöglicht.

Zur Bewegung der Werkstückträger in der Verpackungsvorrichtung können beispielsweise Transportbänder, Transportschienen oder Schubleisten vorgesehen sein, wie sie aus dem Stand der Technik bekannt sind.

Die Aufgabe wird weiter gelöst durch einen Werkstückträger für eine Verpackungsvorrichtung wie hier beschrieben, wobei der Werkstückträger eine auf einer Trägerplatte befestigte Aufnahmeeinrichtung umfasst. Die Aufnahmeeinrichtung weist mehrere zueinander in Werkzeugordnung angeordnete Aufnahmeöffnungen auf, in welche jeweils ein Spritzgussteil bis zu einem Halteende des Spritzgussteils einführbar ist.

Insbesondere handelt es sich bei den in die Aufnahmeöffnungen der Aufnahmeeinrichtung einführbaren Spritzgussteilen um Pipettenspitzen. Pipettenspitzen weisen in der Regel einen länglichen, rohrförmigen, leicht konischen Körper auf, welcher an dem einen Ende eine Pipettieröffnung und an dem anderen Ende eine Aufstecköffnung zum Aufstecken auf einen Aufnahmekonus einer Pipettiervorrichtung aufweist. Im Bereich der Aufstecköffnung weist der rohrförmige Körper an seiner Mantelfläche einen umlaufenden Bund auf, welcher zur Halterung der Pipettenspitze am Rand einer Aufnahmeöffnung der Aufnahmeeinrichtung dient. Der umlaufende Bund stellt somit das Halteende einer Pipettenspitze dar.

Bevorzugt weist die Aufnahmeeinrichtung des erfindungsgemässen Werkstückträgers einen Aufnahmebereich zur Halterung von Spritzgussteilen und einen Führungsbereich zur Reduzierung des seitlichen Spiels von Spritzgussteilen in der Aufnahmeeinrichtung auf.

Der Aufnahmebereich und der Führungsbereich weisen jeweils mehrere zueinander in Werkzeugordnung angeordnete Aufnahmeöffnungen auf. Die Aufnahmeöffnungen des Aufnahmebereichs und des Führungsbereichs sind koaxial ausgerichtet.

Eine solche Aufnahmeeinrichtung erlaubt es, Spritzgussteile entlang einer vordefinierten Vorzugsrichtung des Werkstückträgers auszurichten, beispielsweise in Schwerkraftrichtung. Dabei sind die Spritzgussteile querab zur ihrer Einführrichtung in die Aufnahmeeinrichtung im Wesentlichen spielfrei gehaltert. Insbesondere lassen sich so Pipettenspitzen mit ihrer Pipettieröffnung voraus in Aufnahmeöffnungen des Aufnahmebereichs einführen und durch Auflage ihres Bundes auf dem Rand der jeweiligen Aufnahmeöffnung haltern. Der Durchmesser der Aufnahmeöffnungen des Führungsbereichs und des Aufnahmebereichs sowie der Abstand des Führungsbereichs vom Aufnahmebereich sind so gewählt, dass die Pipettenspitzen in den jeweiligen Aufnahmeöffnungen des Aufnahmebereichs und des Führungsbereichs in Querrichtung der Pipettenspitzen im Wesentlichen spielfrei sind.

Diese Ausrichtung der Spritzgussteile in eine vordefinierte Vorzugsrichtung im Werkstückträger trägt zur Stabilisierung der Spritzgussteile im Werkstückträger bei und erleichtert ihre Prüfung.

Bevorzugt weist die Trägereinrichtung und/oder die Aufnahmeeinrichtung des erfindungsgemässen Werkstückträgers jeweils wenigstens ein Zentriermittel zur Ausrichtung der Trägereinrichtung und/oder der Aufnahmeeinrichtung auf. Dadurch kann beispielsweise die Ausrichtung mehrere Werkstückträger relativ zueinander erleichtert werden, wodurch auch die Ausrichtung der Aufnahmeöffnungen mehrerer Werkstückträger zur Erreichen der Werkzeugordnung vereinfacht wird. Alternativ oder zusätzlich dazu kann beispielsweise das Einpressen von Filterelementen durch Zentriermittel an der Aufnahmeeinrichtung eines erfindungsgemässen Werkstückträgers, welche mit Zentriermitteln einer Vorrichtung zum Bestücken von Pipettenspitzen mit Filterelementen in Wirkverbindung bringbar sind, sicherer erfolgen, wie nachfolgend noch näher erläutert wird.

In einer bevorzugten Ausführungsform ist die Trägereinrichtung des erfindungsgemässen Werkstückträgers als Körper mit einer Grundfläche, einer Deckfläche und vier Seitenflächen ausgebildet. In dieser Ausführungsform sind an wenigstens einer der Seitenflächen der Trägereinrichtung, bevorzugt an zwei benachbarten Seitenflächen der Trägereinrichtung, jeweils wenigstens eine abgesetzte Nut angeordnet. Die abgesetzte Nut kann beispielsweise als Stopnut dienen, um nach Eingriff eines entsprechend ausgebildeten Stopdorns in die abgesetzte Nut das Herunterfallen von einem Transportband zu verhindern. Durch die Anordnung von abgesetzten Nuten an zwei benachbarten Seitenflächen wird erreicht, dass der Werkstückträger beim Einsetzen auf ein Transportband nicht besonders ausgerichtet werden muss und/oder dass auch nach einem Richtungswechsel querab eine der abgesetzten Nuten für die beschriebene Stopfunktion zur Verfügung steht.

In einer bevorzugten Ausführungsform des erfindungsgemässen Werkstückträgers umfasst der Werkstückträger ein Identifizierungselement, durch das der Werkstückträger kodiert ist. Besonders bevorzugt umfasst jede Aufnahmeöffnung des Werkstückträgers ein Identifizierungselement, durch das jede Aufnahmeöffnung kodiert ist. Durch die Kodierung der Werkstückträger und/oder der Aufnahmeöffnungen wird eine besonders sichere Zuordnung der Spritzgussteile zu den Kavitäten des Spritzgusswerkzeugs erreicht.

Bevorzugt handelt es sich bei den Indentifizierungselementen um Barcodes oder RFID-Chips, da derartige Identifizierungselemente besonders schnell und sicher ausgelesen werden können.

Die Aufgabe wird weiter gelöst durch einen Kombinationsgreifer für eine Verpackungsvorrichtung wie hier beschrieben, wobei der Kombinationsgreifer einen Grundkörper mit mehreren pneumatischen Werkzeugen umfasst. Jedes der pneumatischen Werkzeuge umfasst dabei einen Zylinder mit einem Zylinderinnenraum, einen Anschluss zum Verbinden des Zylinderinnenraums mit einer Druckquelle, einen im Zylinderinnenraum in Längsrichtung des Zylinders beweglichen Kolben, sowie eine mit dem Kolben verbundene und im Zylinder abdichtend geführte hohle Kolbenstange. Ferner umfasst jedes der pneumatischen Werkzeuge ein an einem Ende der Kolbenstange ausserhalb des Zylinders angeordnetes hohles Greifelement zur Aufnahme eines Spritzgussteils sowie einen Anschluss zum Verbinden eines Hohlraums, welcher gemeinsam durch die Kolbenstange und das Greifelement gebildet wird, mit einer Unterdruckquelle.

Ein derartiger Kombinationsgreifer ist zur effizienten und sicheren Manipulation von Spritzgussteilen ausgebildet, wobei jedes der pneumatischen Werkzeuge zur Vereinzelung der Spritzgussteile einzeln angesteuert bzw. betätigt werden kann. Der erfindungsgemässe Kombinationsgreifer weist ausserdem den Vorteil auf, dass er problemlos an einem üblichen Industrieroboter angebracht werden kann und somit einfach durch diesen bewegbar ist. Es ist selbstverständlich auch möglich, dass statt den pneumatischen Werkzeugen andere Antriebe, beispielsweise elektrische Antriebe, zum Heben und Senken der zur Aufnahme jeweils eines Spritzgussteils ausgebildeten Greifelemente verwendet werden.

Für den Fall, dass es sich bei den Spritzgussteilen um Pipettenspitzen handelt, sind die Greifelemente des erfindungsgemässen Kombinationsgreifers vorzugsweise als Aufsteckelemente ausgebildet, auf die die Pipettenspitzen mit ihrer jeweiligen Aufstecköffnung aufgesteckt werden können.

Bevorzugt umfasst der erfindungsgemässe Kombinationsgreifer ferner eine Antriebseinheit und zumindest ein mit der Antriebseinheit verbundenes Getriebe zur Übertragung einer Drehbewegung von der Antriebseinheit auf die Kolbenstange. Dadurch wird die Drehbarkeit der Spritzgussteile am Kombinationsgreifer ermöglicht, wodurch insbesondere die Prüfung der Geradheit von langgestreckten Spritzgussteilen wie Pipettenspitzen effizienter gestaltet werden kann, da in diesem Fall lediglich eine Messeinrichtung zur vollumfänglichen Beurteilung der Geradlinigkeit benötigt wird. Dies verringert die Komplexität der Verpackungsvorrichtung und spart Kosten.

Bevorzugt handelt es sich bei dem Getriebe um ein Zahnradgetriebe. In diesem Fall umfasst die Kolbenstange eine Aussenhülse und eine Innenhülse, welche gegenseitig in Längsrichtung zueinander verschiebbar sind. Das Greifelement ist an der Aussenhülse angeordnet. Zur Übertragung der Drehbewegung von dem Zahnradgetriebe auf die Kolbenstange weist die Aussenhülse in Umfangrichtung ein Zahnrad auf, welches mit dem Zahnradgetriebe in Wirkverbindung steht oder bringbar ist. Ein solcher Antrieb arbeitet besonders effizient und verschleissarm, wodurch die Haltbarkeit und die Standzeit des erfindungsgemässen Kombinationsgreifers erhöht wird.

Die Aufgabe wird weiter gelöst durch eine Vorrichtung zum Bestücken von Spritzgussteilen, insbesondere Pipettenspitzen, mit Filterelementen, insbesondere zur Verwendung in einem Verfahren zum Umsetzen von Spritzgussteilen aus einer Spritzgiessmaschine in Verpackungsbehälter wie hier beschrieben.

Insbesondere wird die Aufgabe gelöst durch eine Vorrichtung zum Bestücken von Spritzgussteilen mit Filterelementen umfassend eine Einpressvorrichtung und eine Zentriervorrichtung. Die Einpressvorrichtung umfasst mehrere zueinander in Werkzeugordnung angeordnete Einpresshülsen, in denen jeweils ein Einpressdorn in Längsrichtung der Einpresshülsen bewegbar ist. Die Zentriervorrichtung umfasst mehrere zueinander in Werkzeugordnung angeordnete Einführhilfen, die der Fixierung der Spritzgussteile in einem Werkstückträger und der Führung der Einpresshülsen in die Spritzgussteile dienen. Insbesondere handelt es sich bei dem Werkstückträger um einen Werkstückträger wie hier beschrieben. Zu diesem Zweck umfasst die Zentriervorrichtung weiter ein erstes Zentrierelement zur Zentrierung mit einem Zentriermittel des Werkstückträgers, sowie ein zweites Zentrierelement zur Zentrierung mit einem Zentriermittel der Einpressvorrichtung. Die Einführhilfen, die Einpresshülsen sowie die zu bestückenden Spritzgussteile sind koaxial ausgerichtet oder ausrichtbar, sodass ein Filterelement, welches an der den Spritzgussteilen zugewandten Unterseite eines Einpressdorns gehalten ist, in einer geradlinigen Bewegung durch eine Einführhilfe hindurch in das Innere eines in einer Aufnahmeöffnung eines Werkstückträgers gehalterten Spritzgussteils einpressbar ist. Die Einpresshülsen sind an einer Hülsenhalteplatte und die Einpressdorne an einer Dornhalteplatte angeordnet, wobei die Hülsenhalteplatte und die Dornhalteplatte über einen in einem Zylinder bewegbaren Kolben miteinander verbunden sind. Eine Bewegung des Kolbens bewirkt dabei eine Bewegung der Einpressdorne in den Einpresshülsen.

Eine derartige Vorrichtung ist insbesondere zum Bestücken von Pipettenspitzen mit Filterelementen geeignet.

Die Aufgabe wird weiter gelöst durch eine Vorrichtung zum Bereitstellen, Befüllen und Weiterleiten von Verpackungsbehältern in einer Verpackungsvorrichtung, insbesondere zur Verwendung in einem Verfahren zum Umsetzen von Spritzgussteilen aus einer Spritzgiessmaschine in Verpackungsbehälter wie hier beschrieben.

Insbesondere wird die Aufgabe gelöst durch eine Vorrichtung zum Bereitstellen, Befüllen und Weiterleiten von Verpackungsbehältern in einer Verpackungsvorrichtung, wobei die Vorrichtung mindestens einen Pufferplatz für leere Verpackungsbehälter, mindestens einen Befüllplatz zur Befüllung jeweils eines Verpackungsbehälters mit Spritzgussteilen, sowie mindestens einen Pufferplatz für befüllte Verpackungsbehälter. Leere Verpackungsbehälter sind durch eine erste Transporteinrichtung bereitstellbar und befüllte Verpackungsbehälter durch eine zweite Transporteinrichtung einem nachgeordneten Abschnitt der Verpackungsvorrichtung zuführbar. Die leeren und befüllten Verpackungsbehälter sind durch eine dritte Transporteinrichtung von dem mindestens einen Pufferplatz für leere Verpackungsbehälter über den mindestens einen Befüllplatz hin zu dem mindestens einen Pufferplatz für befüllte Verpackungsbehälter bewegbar.

Eine derartige Vorrichtung ist insbesondere zum Bereitstellen, Befüllen und Weiterleiten von Pipettenspitzenhaltern in einer Verpackungsvorrichtung für Pipettenspitzen geeignet.

Bevorzugt weist die erfindungsgemässe Vorrichtung zum Bereitstellen, Befüllen und Weiterleiten von Verpackungsbehältern zusätzlich eine erste Umlenkeinrichtung, insbesondere eine über die erste Transporteinrichtung ausschwenkbare Leitplanke, zum Umlenken von leeren Verpackungsbehältern von der ersten Transporteinrichtung auf den von der ersten Transporteinrichtung aus gesehen ersten Pufferplatz für leere Verpackungsbehälter auf. Zusätzlich oder alternativ dazu kann die erfindugnsgemässe Vorrichtung zum Bereitstellen, Befüllen und Weiterleiten von Verpackungsbehältern eine zweite Umlenkeinrichtung, insbesondere eine über die zweite Transporteinrichtung ausschwenkbare Leitplanke, zum Freigeben und/oder Umlenken von befüllten Verpackungsbehältern von dem von der zweiten Transporteinrichtung aus nächstliegenden Pufferplatz für befüllte Verpackungsbehälter auf die zweite Transporteinrichtung.

Die Aufgabe wird weiter gelöst durch eine Anlage zur Herstellung und Verpackung von Pipettenspitzen, wobei die erfindungsgemässe Anlage mindestens einen Kombinationsgreifer wie hier beschreiben und/oder mindestens einen Werkstückträger wie hier beschrieben sowie optional mindestens eine Vorrichtung wie hier beschrieben umfasst.

Weitere Vorteile, Merkmale und Einzelheiten der Erfindung werden nachfolgend anhand von Zeichnungen näher erläutert. Es zeigen:
- Fig. 1:: Eine schematische Darstellung der Anordnung von K Kavitäten eines Spritzgiesswerkzeuges;
- Fig. 2:: einen Ausschnitt einer erfindungsgemässen Verpackungsvorrichtung;
- Fig. 3:: eine schematische Darstellung von vier Werkstückträgern jeweils enthaltend eine Untergruppe von U Spritzgussteilen;
- Fig. 4:: eine schematische Darstellung einer kavitätenreinen Abfüllung von Spritzgussteilen in Verpackungsbehälter;
- Fig. 5a:: einen erfindungsgemässen Werkstückträger in einer perspektivischen Ansicht;
- Fig. 5b:: einen Querschnitt durch einen erfindungsgemässen Werkstückträger;
- Fig. 6a:: einen erfindungsgemässen Kombinationsgreifer in einer perspektivischen Ansicht;
- Fig. 6b:: einen Querschnitt durch einen erfindungsgemässen Kombinationsgreifer;
- Fig. 6c:: einen Querschnitt durch eine weitere Ausführungsform eines erfindungsgemässen Kombinationsgreifers;
- Fig. 7:: eine Querschnitt einer Anordnung aus einem Werkstückträger und einer Vorrichtung zum Bestücken von Pipettenspitzen mit Filterelementen;
- Fig. 8:: eine Draufsicht auf eine Vorrichtung zum Bereitstellen, Befüllen und Weiterleiten von Verpackungsbehältern;
- Fig. 9:: eine Spritzgussanlage zur Herstellung und Verpackung von Pipettenspitzen in einer perspektivischen Ansicht;
- Fig. 10:: ein Flussdiagramm mit Rohstoff und Produktströmen einer erfindungsgemässen Anlage.

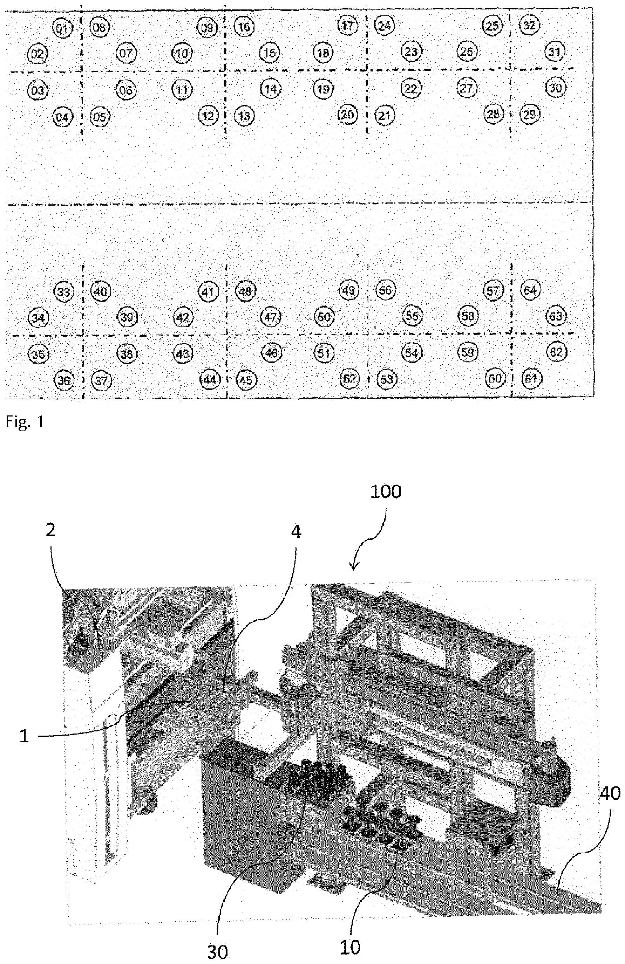

Figur 1 zeigt eine schematische Darstellung der Anordnung von K Kavitäten eines Spritzgiesswerkzeuges. Im gezeigten Beispiel umfasst das Spritzgiesswerkzeug 64 Kavitäten (K = 64), welche in 8 Untereinheiten zu jeweils 8 Kavitäten (U = 8) angeordnet sind. In einem Schuss der Spritzgiessmaschine wird in jeder Kavität jeweils ein Spritzgussteil produziert. In dieser Anordnung werden die Spritzgussteile, beispielsweise die Pipettenspitzen, aus dem Spritzgiesswerkzeug entnommen. Die Pipetten könnten in dieser Anordnung auf einen gemeinsamen Werkstückträger, dessen Aufnahmeelemente zur Aufnahme der K Spritzgussteile die Anordnung der K Spritzgussteile im Spritzgiesswerkzeug repliziert, abgelegt werden. Die Spritzgussteile eines Schusses würden in dieser Ausführungsform des erfindungsgemässen Verfahrens alle gemeinsam im Werkstückträger zu mindestens einem Kombinationsgreifer verfahren werden. In dem in Figur 1 gezeigten Beispiel nehmen der oder die Kombinationsgreifer jeweils eine Untereinheit enthaltend 8 Spritzgussteile gleichzeitig auf, um diese dann kavitätenrein in Verpackungsbehälter zu sortiert, wie nachfolgend noch näher beschrieben wird. Bevorzugt werden die K Spritzgussteile jedoch auf mehrere Träger aufgeteilt, da dies zuverlässiger funktioniert.

Figur 2 zeigt einen Ausschnitt einer erfindungsgemässen Verpackungsvorrichtung 100. Gezeigt sind ein Entnahmegreifer 4, welcher Spritzgussteile 1 aus einer Spritzgiessmaschine 2 in Werkzeugordnung entnommen hat. Zur Aufnahme der Spritzgussteile 1 in Werkzeugordnung stehen in dem gezeigten Beispiel acht Werkstückträger 10 bereit, welche durch eine Transporteinrichtung 40 verfahrbar sind. Bei der Transporteinrichtung 40 handelt es sich beispielsweise um ein Transportband. Der in Figur 2 gezeigte Ausschnitt zeigt ferner Messeinrichtungen 30, im vorliegenden Beispiel acht Kameras. Im gezeigten Ausführungsbeispiel sind die Werkstückträger 10 mittels der Transporteinrichtung 40 derart unter die Messeinrichtungen 30 verfahrbar, dass je ein Werkstückträger 10 unter einer Messeinrichtung 30 positioniert werden kann. In dieser Position kann eine optische Kontrolle des Halteendes von in den Werkstückträgern 10 gehalterten Spritzgussteilen 1 erfolgen (nicht gezeigt).

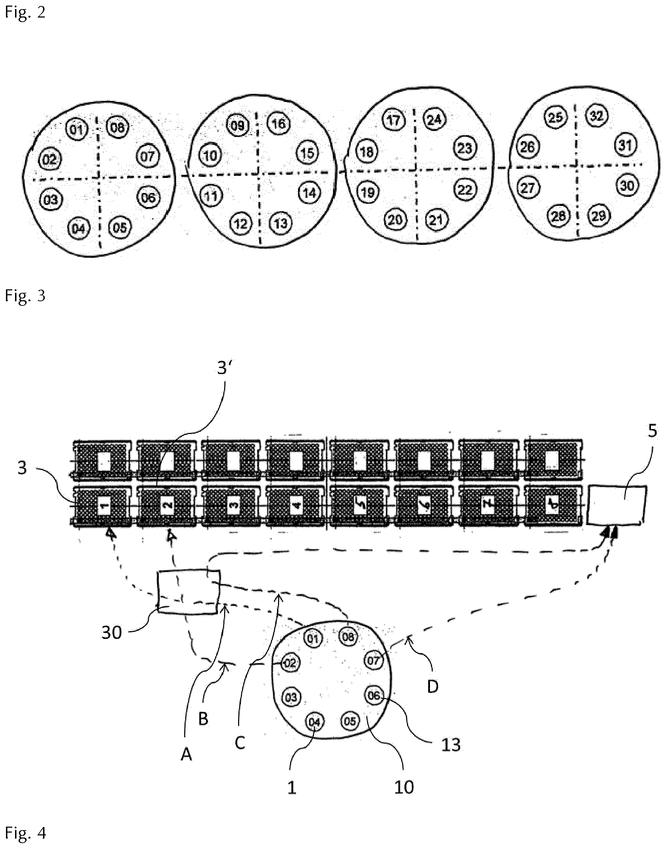

Figur 3 zeigt eine schematische Darstellung von vier Werkstückträgern, welche jeweils zur Aufnahme einer Untergruppe von U Spritzgussteilen, beispielsweise Pipettenspitzen, ausgebildet sind. In diesem Beispiel kann jeder Werkstückträger acht Spritzgussteile 1 aufnehmen (U=8). Die Anordnung der werkstückträgerseitig vorgesehenen Aufnahmeöffnungen für Spritzgussteile, welche im vorliegenden Beispiel von eins bis zweiunddreissig durchnummeriert sind, ist identisch mit der Anordnung der Kavitäten im Spritzgiesswerkzeug, sodass die Spritzgussteile ohne Positionsanpassung direkt vom Spritzgusswerkzeug in die Werkstückträger abgelegt werden können.

In Figur 4 ist schematisch dargestellt, wie der kavitätenreine Transfer von Pipettenspitzen 1 von Aufnahmeöffnungen 13 eines Werkstückträgers 10 in Verpackungsbehälter 3, 3' erfolgt. In einem ersten Schritt nimmt ein erfindungsgemässer Kombinationsgreifer alle acht Pipettenspitzen 1 aus den mit "01" bis "08" durchnummerierten Aufnahmeöffnungen 13 auf (nicht gezeigt). Die Pipettenspitzen 1 der Aufnahmeöffnungen "01" und "02" haben bereits alle vorhergehenden Qualitätskontrollen bestanden (nicht gezeigt). In dem mit Pfeil A gekennzeichneten Pfad wird die Pipettenspitze aus Aufnahmeöffnung "01" zunächst in einer Messeinrichtung 30 auf Geradheit geprüft und nach bestandener Prüfung in Verpackungsbehälter 3 abgelegt. Daraufhin wird gemäss dem mit Pfeil B gekennzeichneten Pfad die Pipettenspitze aus Aufnahmeöffnung "02" in der Messeinrichtung 30 geprüft und nach bestandener Prüfung nicht in Verpackungsbehälter 3 sondern in Verpackungsbehälter 3' abgelegt. Die Pipettenspitze 1 aus Aufnahmeöffnung "08" hat alle vorhergehenden Qualitätskontrollen bestanden (nicht gezeigt) und wird gemäss dem mit Pfeil C gekennzeichneten Pfad der Messeinrichtung 30 zur Beurteilung der Geradheit der Pipettenspitze einer weiteren Qualitätskontrolle zugeführt. Die Pipettenspitze 1 aus Aufnahmeöffnung "08" besteht diese Qualitätskontrolle nicht, weil sie verzogen, d.h. "krumm", ist und wird in der Folge in einem Abfallbehälter 5 entsorgt. Die Pipettenspitze 1 aus Aufnahmeöffnung "07" hat bereits eine vorhergehende Qualitätskontrolle nicht bestanden, was durch eine Steuerungseinrichtung registriert wurde (nicht gezeigt). In der Folge wir diese Pipettenspitze gemäss dem mit Pfeil D gekennzeichneten Pfad direkt in dem Abfallbehälter 5 entsorgt, ohne sie zuvor noch durch die Messeinrichtung 30 zu beurteilen. Dadurch wird das Verfahren beschleunigt.

Bei der Messeinrichtung 30 kann es sich beispielsweise um eine Kamera oder ein anderes optisches System handeln, welches zur Feststellung einer Abweichung der jeweils gemessenen Pipettenspitze oder Pipettenspitzen von einem Normzustand ausgebildet ist. Unter einem Normzustand wird in diesem Zusammenhang eine Pipettenspitze verstanden, welche das durch die jeweilige Messeinrichtung untersuchte Qualitätskriterium erfüllt, d.h. in Ordnung ist.

Insbesondere handelt es sich bei der Messeinrichtung 30 um eine Einrichtung zur Prüfung der Geradheit der Pipettenspitzen.

Selbstverständlich ist es erfindungsgemäss möglich, dass die Pipettenspitzen in einer anderen Reihenfolge als in diesem Ausführungsbeispiel beschrieben in die Verpackungsbehälter vereinzelt werden.

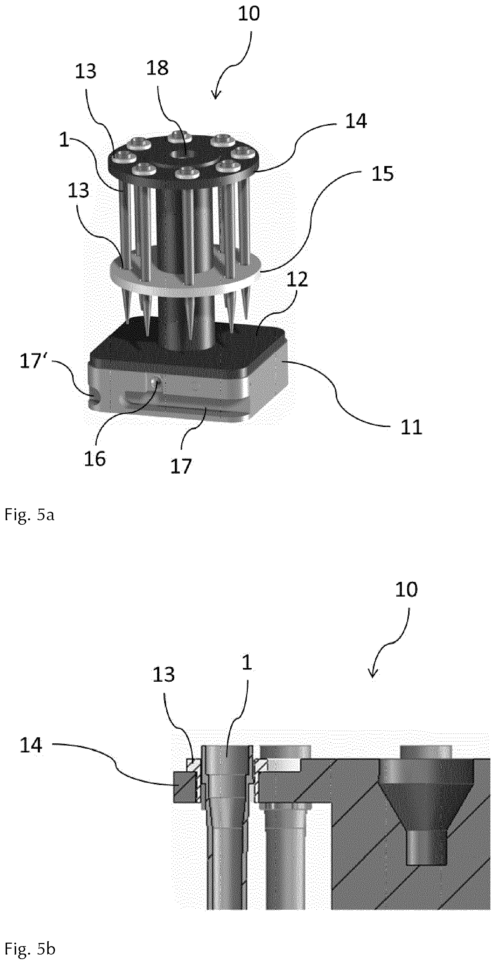

Figur 5a zeigt einen erfindungsgemässen Werkstückträger 10 für Pipettenspitzen 1 in einer perspektivischen Ansicht. Der Werkstückträger umfasst eine Trägereinrichtung 11 und eine Aufnahmeeinrichtung 12, welche im gezeigten Ausführungsbeispiel auf der Trägereinrichtung 11 befestigt ist. Die Aufnahmeeinheit 12 kann, wie im vorliegenden Ausführungsbeispiel gezeigt, ferner einen Aufnahmebereich 14 und einen Führungsbereich 15 umfassen, welche hier jeweils acht Aufnahmeöffnungen 13 zur Aufnahme von Pipettenspitzen 1 aufweisen. Die Aufnahmeöffnungenn 13 des Aufnahmebereichs 14 und des Führungsbereichs 15 sind dabei koaxial ausgerichtet, sodass eine Pipettenspitze 1 durch eine Aufnahmeöffnung 13 des Aufnahmebereichs 14 gehaltert und durch die zugehörige Aufnahmeöffnung 13 des Führungsbereichs 15 stabilisiert werden kann. Die Stabilisierungsfunktion wird dabei im Wesentlichen durch die Verhinderung oder Reduzierung von seitlichem Spiel der Pipettenspitze 1 in den Aufnahmeöffnungenn 13 des Aufnahmebereichs 14 und des Führungsbereichs 15 erzielt. Im gezeigten Ausführungsbeispiel umfasst der Werkstückträger 10 ferner ein im Bereich der Trägereinheit angeordnetes Zentriermittel 16 in Form einer Ausnehmung sowie zwei abgesetzte Nuten 17, 17', welche ebenfalls im Bereich der Trägereinheit angeordnet sind. Ein weiteres Zentriermittel 18 ist im Bereich des Aufnahmebereichs 14 angeordnet, und zwar in Form einer Ausnehmung.

In Figur 5b ist einen Querschnitt durch den Aufnahmebereich 14 des erfindungsgemässen Werkstückträgers 10 aus Figur 5a gezeigt, wobei aus dieser Ansicht die rohrförmige und Konus-artige Form der Pipettenspitzen 1 hervorgeht. Die Pipettenspitzen werden mit ihrer Pipettieröffnung voran (nicht gezeigt) in die Aufnahmeöffnungen 13 eingeführt, sodass der im Bereich der Aufstecköffnung der Pipettenspitzen 1 angeordnete umlaufende Bund auf dem Rand der Aufnahmeöffnung 13 zu liegen kommt und die Pipettenspitze 1 dadurch entgegen der Schwerkraftrichtung gehaltert wird.

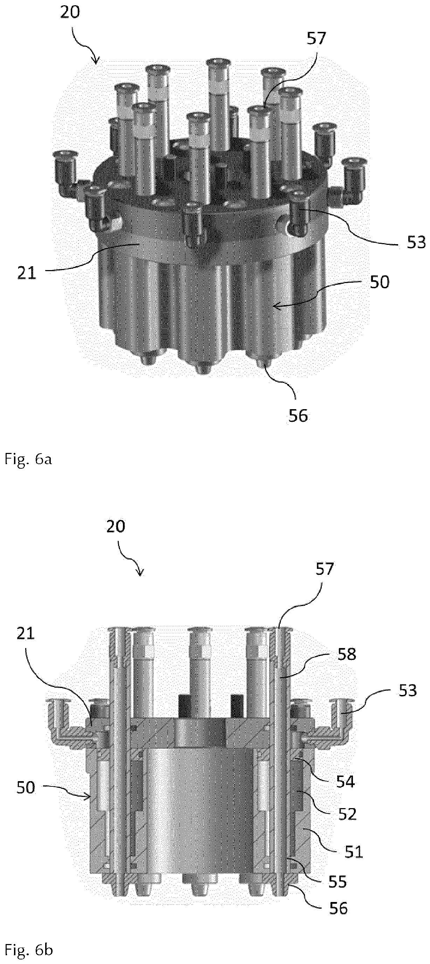

Figur 6a zeigt einen erfindungsgemässen Kombinationsgreifer 20 in einer perspektivischen Ansicht. Der Kombinationsgreifer 20 umfasst einen Grundkörper 21, welcher mehrere pneumatische Werkzeuge 50 umfasst. Im vorliegenden Ausführungsbeispiel besitzt der Grundkörper 21 acht pneumatische Werkzeuge 50. Die pneumatischen Werkzeuge 50 und insbesondere die zur Aufnahme von Spritzgussteilen ausgebildeten Greifelemente 56 sind am Kombinationsgreifer in Werkzeugordnung angeordnet, um Spritzgussteile mit entsprechender Werkzeugordnung aufnehmen zu können. Im Vorliegenden Ausführungsbeispiel sind die Greifelemente 56 des Kombinationsgreifers 20 als konische Aufsteckelemente ausgebildet, welche jeweils in eine Aufstecköffnung einer Pipettenspitze eingeführt werden können (nicht gezeigt). Jedes pneumatische Werkzeug 50 umfasst unter anderem einen Anschluss 53 für eine Druckquelle sowie einen Anschluss für eine Unterdruckquelle 57, wobei die auf die Aufsteckelemente der pneumatischen Werkzeuge aufgesteckten Pipettenspitzen durch das Anlegen von Unterdruck am Aufsteckelement gehalten werden können und durch Abstellen des Unterdrucks wieder von diesen abgestossen werden können, wie nachfolgend noch detaillierter erläutert wird.

Figur 6b zeigt einen Querschnitt durch den Kombinationsgreifer 20 aus Figur 6a, wobei jedes der acht pneumatischen Werkzeuge 50 einen Zylinder 51 mit einem Zylinderinnenraum 52, einen Anschluss 53 zum Verbinden des Zylinderinnenraums 52 mit einer Druckquelle, einen im Zylinderinnenraum 52 in Längsrichtung des Zylinders 51 beweglichen Kolben 54, eine mit dem Kolben 54 verbundene und im Zylinder 51 abdichtend geführte hohle Kolbenstange 55, ein hohles Greifelement 56, sowie einen Anschluss 57 zum Verbinden eines durch den im Innern der Kolbenstange 55 und des Greifelements 56 gebildeten Hohlraums 58 mit einer Unterdruckquelle. Die Greifelemente 56 sind an einem Ende der Kolbenstange 55 ausserhalb des Zylinders 51 angeordnet, und zwar auf der den aufzunehmenden Spritzgussteilen zugewandten Unterseite des Kombinationsgreifers 20.

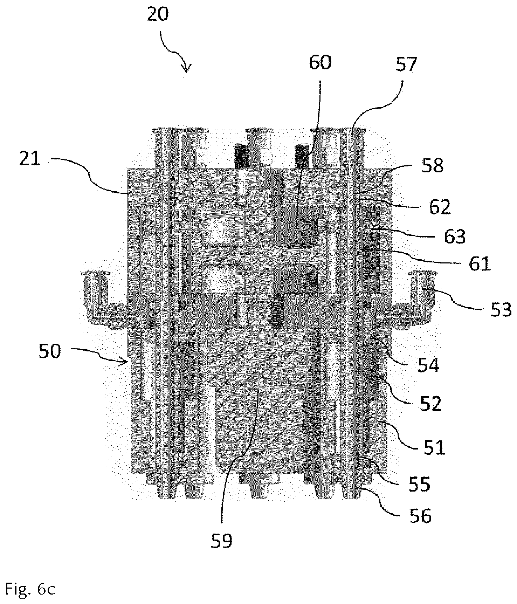

In Figur 6c ist ein weiteres Ausführungsbeispiel eines erfindungsgemässen Kombinationsgreifers 20 in einem Querschnitt gezeigt. In dieser Ausführungsform umfasst der Kombinationsgreifer 20 zusätzlich zu den bereits zum Kombinationsgreifer 20 aus Figur 6b beschriebenen Elementen eine Antriebseinheit 59, welche im Grundkörper 21 angeordnet ist, sowie mehrere mit der Antriebseinheit 59 verbundene Getriebe 60 zur Übertragung einer Drehbewegung von der Antriebseinheit 59 auf die Kolbenstange 55. Das an der Kolbenstange 55 angeordnete Greifelement 56 wird dadurch mitgedreht und folglich auch ein von einem sich drehenden Greifelement 56 gehaltertes Spritzgussteil. Bei dem Getriebe 60 des gezeigten Ausführungsbeispiels handelt es sich um ein Zahnradgetriebe. Die Kolbenstange 55 umfasst hier eine Aussenhülse 61 und eine zumindest teilweise in der Aussenhülse 61 angeordnete Innenhülse 62, wobei die Aussenhülse 61 und die Innenhülse 62 gegenseitig in Längsrichtung zueinander verschiebbar sind. Die Aussenhülse 61 ist mit dem Greifelement 56 verbunden und weist in Umfangrichtung ein Zahnrad 63 auf. Indem das Zahnrad 63 mit dem Zahnradgetriebe 60 in Wirkverbindung steht oder gebracht wird kann eine Drehbewegung von dem Zahnradgetriebe 60 auf die Aussenhülse 61 der Kolbenstange 55 übertragen werden.

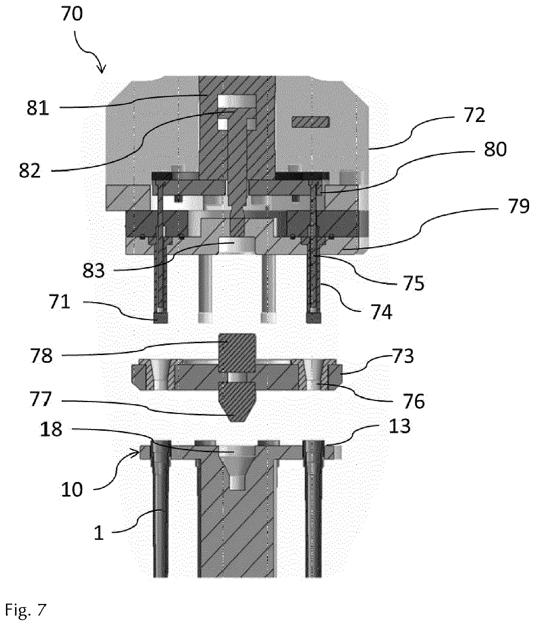

In Figur 7 ist eine Anordnung aus einem Werkstückträger (10) und einer Vorrichtung (70) zum Bestücken von Pipettenspitzen (1) mit Filterelementen (71) im Querschnitt dargestellt. Die Vorrichtung (70) umfasst eine Einpressvorrichtung (72) und eine Zentriervorrichtung (73), wobei die Einpressvorrichtung (72) mehrere zueinander in Werkzeugordnung angeordnete Einpresshülsen (74) umfasst, in denen jeweils ein Einpressdorn (75) in Längsrichtung der Einpresshülsen (74) bewegbar ist. Die Zentriervorrichtung (73) umfasst mehrere zueinander in Werkzeugordnung angeordnete Einführhilfen (76) zur Fixierung der Pipettenspitzen (1), welche insbesondere in einem erfindungsgemässen Werkstückträger (10) gehaltert sind, und zur Führung der Einpresshülsen (74) in die Pipettenspitzen (1). Ferner weist die Zentriervorrichtung (73) ein erstes Zentrierelement (77) zur Zentrierung mit einem Zentriermittel (18) des Werkstückträgers (10) sowie ein zweites Zentrierelement (78) zur Zentrierung mit einem Zentriermittel (83) der Einpressvorrichtung (72) auf. Wie in Figur 7 dargestellt werden die Einführhilfen (76), die Einpresshülsen (74) sowie die mit den Filterelementen (71) zu bestückenden Pipettenspitzen (1) zum Einpressen der Filterelemente (71) koaxial ausgerichtet. Die Zentriervorrichtung (73) und die Einpressvorrichtung (72) sind jeweils vertikal bewegbar, beispielsweise durch jeweils einen Linearmotor, wobei bei einem Bestückvorgang zunächst die Zentriervorrichtung (73) auf den Werkstückträger (10) herunterfährt und anschliessend die Einpressvorrichtung (72) auf die Zentriervorrichtung (73) herunterfährt. Je nach dem welche Filterelemente (71) und/oder Pipettenspitzen (1) mit der Vorrichtung verwendet werden kann es erforderlich oder gewünscht sein, dass die Filterelemente (71) durch Ausfahren der Einpressdorne (75) aus den Auspresshülsen (74) noch tiefer in die Pipettenspitzen (1) eingepresst werden. Dazu sind die Einpresshülsen (74) an einer Hülsenhalteplatte (79) und die Einpressdorne (75) an einer Dornhalteplatte (80) angeordnet, wobei die Hülsenhalteplatte (79) und die Dornhalteplatte (80) über einen in einem Zylinder (81) bewegbaren Kolben (82) miteinander verbunden sind. Eine Bewegung des Kolbens (82) bewirkt somit eine Bewegung der Einpressdorne (75) in den Einpresshülsen (74) tiefer in die Pipettenspitzen (1) hinein.

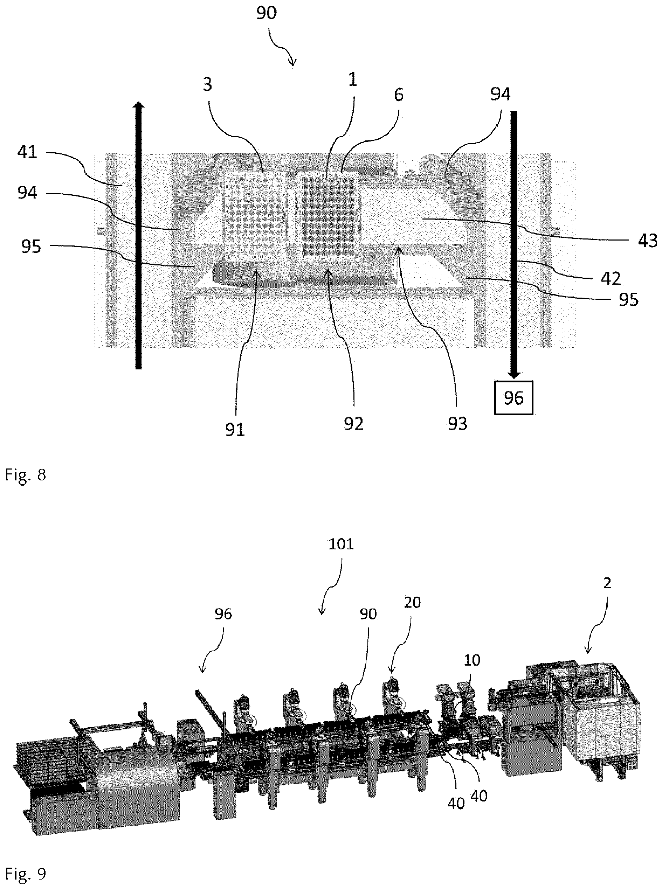

Figur 8 zeigt eine Draufsicht auf eine Vorrichtung (90) zum Bereitstellen, Befüllen und Weiterleiten von Verpackungsbehältern (3). Im vorliegenden Beispiel handelt es sich bei den Verpackungsbehältern (3) um Pipettenspitzenhalter, sogenannte "Racks". Die in Figur 8 gezeigte Vorrichtung (90) umfasst genau einen Pufferplatz (91) für leere Verpackungsbehälter (3), genau einen Befüllplatz (92) zur Befüllung eines Verpackungsbehälters (3) mit Pipettenspitzen (1), sowie genau einen Pufferplatz (93) für befüllte Verpackungsbehälter (6), wobei der Pufferplatz (93) für befüllte Verpackungsbehälter (6) nicht belegt sind. Leere Verpackungsbehälter (3) sind über eine erste Transporteinrichtung (41), beispielsweise über ein Förderband, bereitstellbar und können durch eine Umlenkeinrichtung (94) auf den von der ersten Transporteinrichtung (41) aus gesehen ersten Pufferplatz (91) für leere Verpackungsbehälter (3) der Vorrichtung (90) umgelenkt werden. Beispielsweise erfolgt das Umlenken eines leeren Verpackungsbehälters (3) von der ersten Transporteinrichtung (41) auf den von der ersten Transporteinrichtung (41) aus gesehen ersten Pufferplatz (91) für leere Verpackungsbehälter (3) durch Ausschwenken eines gekrümmten Auslegearms (94) über die erste Transporteinrichtung (41), wobei ein auf den über die erste Transporteinrichtung (41) ausgeschwenkten Auslegearm (94) auflaufender Verpackungsbehälter (3) durch den Auslegearm (94) und optional unter Zuhilfenahme einer Umlenkhilfe (95) auf den von der ersten Transporteinrichtung (41) aus gesehen ersten Pufferplatz (91) für leerer Verpackungsbehälter (3) umgelenkt wird. Der Transport der Verpackungsbehälter (3, 6) zwischen den einzelnen Pufferplätzen (91, 92, 93) der Vorrichtung (90) erfolgt über eine dritte Transporteinrichtung (43), beispielsweise ebenfalls über ein Förderband. Nachdem die Befüllung des Verpackungsbehälters (3) mit Pipettenspitzen (1) auf dem Befüllplatz (92) abgeschlossen ist wird der befüllte Verpackungsbehälter (6) auf den Pufferplatz (93) für befüllte Verpackungsbehälter (6) bewegt und von dort aus an eine zweite Transporteinrichtung (42) abgegeben. Die Übergabe der befüllten Verpackungsbehälter (6) kann über eine weitere Umlenkeinrichtung (94') und gegebenenfalls eine weitere Umlenkhilfe (95') nach dem bereits beschriebenen Prinzip erleichtert werden. Über die zweite Transporteinrichtung (42) sind die befüllten Verpackungsbehälter (6) einem nachgeordneten Abschnitt (96) der Vorrichtung (90) zuführbar, beispielsweise einer Vorrichtung zum Umverpacken eines oder mehrerer befüllter Verpackungsbehälter (6) in Schlauchbeutel oder Blister.

Figur 9 zeigt eine Anlage (101) zur Herstellung und Verpackung von Pipettenspitzen (1). Die gezeigte Anlage (101) umfasst eine Spritzgiessmaschine (2) zur Herstellung von Pipettenspitzen, welche durch einen Entnahmegreifer (nicht gezeigt) aus einem Spritzgiesswerkzeug in Werkzeugordnung entnommen werden. Die Anlage (101) umfasst ferner mehrere Werkzeugträger (10), die auf mehreren Transporteinrichtungen (40) derart angeordnet sind, dass sie die Pipettenspitzen (1) vom Entnahmegreifer in Werkzeugordnung aufnehmen können. Die Anlage (101) umfasst ferner acht Kombinationsgreifer (20) sowie vier Vorrichtungen (90) zum Bereitstellen, Befüllen und Weiterleiten von Verpackungsbehältern, wobei die Befüllung der Verpackungsbehälter durch die Kombinationsgreifer (20) und kavitätenrein erfolgt. Die mit den Pipettenspitzen bestückten Verpackungsbehälter werden einer Sekundärverpackungseinrichtung (96)zugeführt.

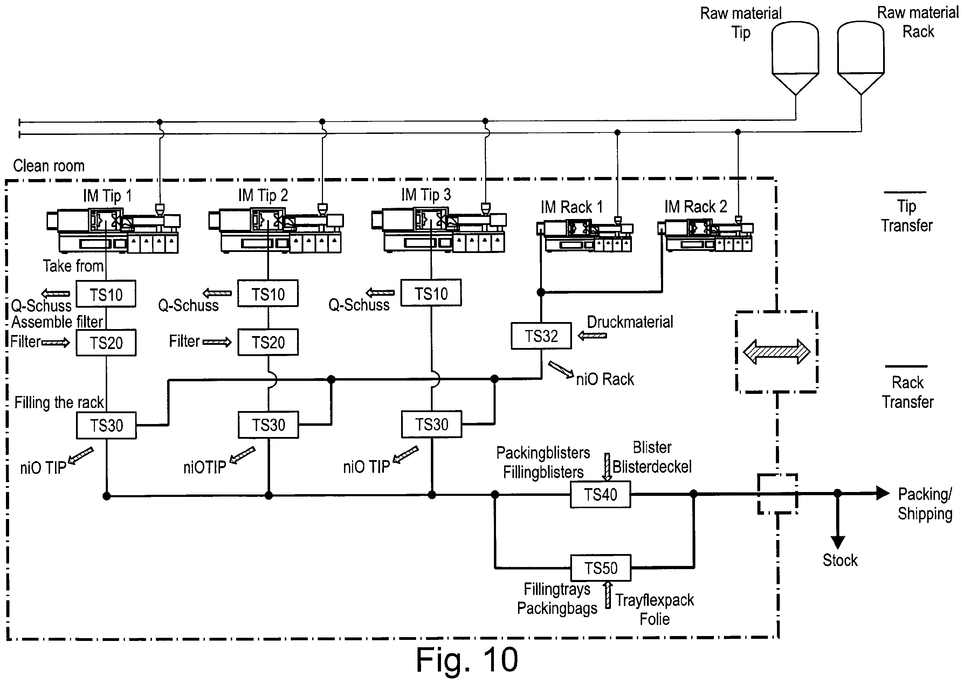

Figur 10 zeigt ein Flussdiagramm, aus dem die Verbindungen zwischen den einzelnen Spritzgiessmaschinen einer grösseren Gesamtanlage hervorgeht. Es ist gezeigt, dass drei Spritzgiessmaschinen zur Herstellung von Pipettenspitzen und zwei Spritzgiessmaschinen zur Herstellung von Verpackungsbehältern für Pipettenspitzen sowie mehrere Qualitätssicherungsstationen derart über Transporteinrichtungen (durch durchgezogene Linien dargestellt) miteinander Verbunden sind, dass insgesamt drei Verpackungsvorrichtungen mit Pipettenspitzen und Racks beliefert werden.

## Patentansprüche

1. Verfahren zum Umsetzen von Spritzgussteilen (1), insbesondere Pipettenspitzen, aus einer Spritzgiessmaschine (2) in Verpackungsbehälter (3), umfassend die folgenden Schritte:
- Gleichzeitige Entnahme von K Spritzgussteilen (1) aus K Kavitäten eines Werkzeugs der Spritzgiessmaschine (2) in Werkzeugordnung durch einen Entnahmegreifer (4);
- Gleichzeitige Ablage der K Spritzgussteile (1) in wenigstens einen Werkstückträger (10) durch den Entnahmegreifer (4) ;
- Gleichzeitige Aufnahme mindestens eines, vorzugsweise einer Mehrzahl von Spritzgussteilen (1) aus dem wenigstens einen Werkstückträger (10) durch zumindest einen Kombinationsgreifer (20);
wobei die durch das Werkzeug der Spritzgiessmaschine (2) vorgegebene Werkzeugordnung der K Spritzgussteile (1) durch den Entnahmegreifer (4) nicht verändert wird,
wobei der zumindest eine Kombinationsgreifer (20) die jeweils aufgenommenen Spritzgussteile (1) beim Befüllen der Verpackungsbehälter (3) vereinzelt, und
wobei K eine natürliche Zahl grösser oder gleich 2 ist.

2. Verfahren nach Anspruch 1, wobei die K Spritzgussteile (1) bei der gleichzeitigen Ablage durch den Entnahmegreifer (4) auf mehrere Werkstückträger (10) verteilt werden, wobei jeder Werkstückträger (10) eine Untergruppe von U Spritzgussteilen (1) erhält, und wobei der zumindest eine Kombinationsgreifer (20) jeweils eine Untergruppe von U Spritzgussteilen (1) aus einem der Werkstückträger (10) aufnimmt und beim Befüllen der Verpackungsbehälter (3) vereinzelt, wobei die Anzahl der zur Aufnahme von K Spritzgussteilen (1) benötigten Werkstückträger (10) vorzugsweise der Anzahl der im Verfahren verwendeten Kombinationsgreifer (20) entspricht, und wobei K ein Vielfaches von U ist.

3. Verfahren nach Anspruch 1 oder 2, wobei Spritzgussteile (1) aus bestimmten Kavitäten des Werkzeugs der Spritzgiessmaschine (2), insbesondere Spritzgussteile (1) aus nur einer Kavität des Werkzeugs der Spritzgiessmaschine (2), in einen Verpackungsbehälter (3) abgefüllt werden.

4. Verfahren nach Anspruch 3, wobei jedes Spritzgussteil (1) einer Kavitätennummer der Spritzgussmaschine (2) zugeordnet ist, wobei die Spritzgussteile (1) durch den Kombinationsgreifer (20) kavitätenrein in Verpackungsbehälter (3) abgelegt werden, wobei in jedem Werkstückträger (10) ein vorherbestimmter Bereich an Kavitätennummern gespeichert ist, und wobei jedem Kombinationsgreifer (20) Verpackungsbehälter (3) mit einem Bereich an Kavitätennummern zugeordnet sind, und wobei ein jeweiliger Werkstückträger (10) demjenigen Kombinationsgreifer (20) zugeführt werden, deren Bereich an Kavitätennummern übereinstimmen.

5. Verfahren nach einem der vorhergehenden Ansprüche, wobei die Abweichung eines Spritzgussteils (1), insbesondere eines langgestreckten Spritzgussteils (1) wie einer Pipettenspitze, von einer Norm mittels einer Messeinrichtung (30), insbesondere einer Kamera, beurteilt wird, wobei das Spritzgussteil (1) zur Beurteilung der Normabweichung von dem Kombinationsgreifer (20) gehaltert und vorzugsweise rotiert wird, und wobei eine Normabweichung des Spritzgussteils (1) als Lageabweichung eines vorbestimmten Bereichs des Spritzgussteils (1) von einer vordefinierten Solllage dieses Bereichs des Spritzgussteils (1) gemessen wird.

6. Verfahren nach einem der vorhergehenden Ansprüche, wobei sämtliche Spritzgussteile (1) vor dem Befüllen der Verpackungsbehälter (3) einen Prüfschritt zur Feststellung von Abweichungen der Spritzgussteile (1) von einem vordefinierten Wert durchlaufen.

7. Verfahren nach Anspruch 6, wobei die festgestellten Abweichungen durch eine Steuerungseinrichtung (7) registriert und den Kavitäten des Werkzeugs der Spritzgiessmaschine (2) zugeordnet werden, wobei bei Überschreitung eines vordefinierten Werts die jeweils betroffene Kavität abgewählt wird und/oder die Produktion der Spritzgiessmaschine (2) unterbrochen wird.

8. Verfahren nach Anspruch 7, wobei Spritzgussteile (1) aus abgewählten Kavitäten nach dem Spritzen verworfen werden, bevorzugt vor der Entnahme der Spritzgussteile (1) durch den Entnahmegreifer (4).

9. Verpackungsvorrichtung (100), insbesondere zur Durchführung des Verfahrens nach einem der Ansprüche 1 bis 8, umfassend
- einen Entnahmegreifer (4) mit mehreren Greifern (9) für Spritzgussteile (1), wobei die Greifer (9) entsprechend der Anordnung der Kavitäten eines Werkzeugs einer Spritzgiessmaschine (2) am Entnahmegreifer (4) angeordnet sind;
- wenigstens einen Werkstückträger (10), der zur gleichzeitigen Aufnahme einer Mehrzahl von Spritzgussteilen (1) ausgebildet ist;
- zumindest einen Kombinationsgreifer (20), der zur gleichzeitigen Aufnahme mindestens eines Spritzgussteils (1) und zur Vereinzelung der aufgenommenen Spritzgussteile (1) in Verpackungsbehälter ausgebildet ist, vorzugsweise ist der zumindest eine Kombinationsgreifer (20) zur gleichzeitigen Aufnahme einer Mehrzahl von Spritzgussteilen (1) und zur Vereinzelung der aufgenommenen Spritzgussteile (1) in Verpackungsbehälter (3) ausgebildet;
- eine Steuerungseinrichtung (7).

10. Verpackungsvorrichtung (100) nach Anspruch 9, wobei die Verpackungsvorrichtung (100) zumindest eine Messeinrichtung (30), insbesondere eine optische Messeinrichtung, zur Beurteilung des Verzugs eines Spritzgussteils (1), insbesondere eines langgestreckten Spritzgussteils wie einer Pipettenspitze, umfasst.

11. Werkstückträger (10) für eine Verpackungsvorrichtung (100) nach einem der Ansprüche 9 oder 10, wobei der Werkstückträger (10) eine auf einer Trägereinrichtung (11) befestigte Aufnahmeeinrichtung (12) umfasst, wobei die Aufnahmeeinrichtung (12) mehrere zueinander in Werkzeugordnung angeordnete Aufnahmeöffnungen (13) aufweist, in welche jeweils ein Spritzgussteil (1), insbesondere eine Pipettenspitze, bis zu einem Halteende des Spritzgussteils (1) einführbar ist.

12. Werkstückträger (10) gemäss Anspruch 11, wobei die Aufnahmeeinrichtung (12) einen Aufnahmebereich (14) zur Halterung von Spritzgussteilen (1) und einen Führungsbereich (15) zur Reduzierung des seitlichen Spiels von Spritzgussteilen (1) in der Aufnahmeeinrichtung (12) aufweist, wobei der Aufnahmebereich (14) und der Führungsbereich (15) jeweils mehrere zueinander in Werkzeugordnung angeordnete Aufnahmeöffnungen (13) aufweisen, und wobei die Aufnahmeöffnungen (13) des Aufnahmebereichs (14) und des Führungsbereichs (15) koaxial ausgerichtet sind.

13. Werkstückträger (10) gemäss einem der Ansprüche 11 oder 12, wobei die Trägereinrichtung (11) und/oder die Aufnahmeeinrichtung (12) jeweils wenigsten ein Zentriermittel (16, 18) zur Ausrichtung der Trägereinrichtung (11) und/oder der Aufnahmeeinrichtung (12) aufweist.

14. Werkstückträger (10) gemäss einem der Ansprüche 11 bis 13, wobei die Trägereinrichtung (11) als Körper mit einer Grundfläche, einer Deckfläche und vier Seitenflächen ausgebildet ist, wobei an wenigstens einer der Seitenflächen der Trägereinrichtung (11), bevorzugt an zwei benachbarten Seitenflächen der Trägereinrichtung (11), jeweils wenigstens eine abgesetzte Nut (17) angeordnet ist.

15. Werkstückträger (10) gemäss einem der Ansprüche 11 bis 14, wobei der Werkstückträger (10), vorzugsweise jede Aufnahmeöffnung (13) des Werkstückträgers (10), durch ein Identifizierungselement (19), insbesondere einen Barcode oder einen RFID-Chip, kodiert ist.

16. Kombinationsgreifer (20) für eine Verpackungsvorrichtung (100) nach einem der Ansprüche 9 oder 10, umfassend einen Grundkörper (21) mit mehreren, bevorzugt acht, pneumatischen Werkzeugen (50), wobei jedes der pneumatischen Werkzeuge (50)
- einen Zylinder (51) mit einem Zylinderinnenraum (52);
- einen Anschluss (53) zum Verbinden des Zylinderinnenraums (52) mit einer Druckquelle;
- einen im Zylinderinnenraum (52) in Längsrichtung des Zylinders (51) beweglichen Kolben (54);
- eine mit dem Kolben (54) verbundene und im Zylinder (51) abdichtend geführte hohle Kolbenstange (55);
- ein an einem Ende der Kolbenstange (55) ausserhalb des Zylinders (51) angeordnetes hohles Greifelement (56) zur Aufnahme eines Spritzgussteils (1);
- einen Anschluss (57) zum Verbinden eines gemeinsam durch die Kolbenstange (55) und das Greifelement (56) gebildeten Hohlraums (58) mit einer Unterdruckquelle;
umfasst.

17. Kombinationsgreifer (20) nach Anspruch 16, zusätzlich umfassend eine Antriebseinheit (59) und zumindest ein mit der Antriebseinheit (59) verbundenes Getriebe (60) zur Übertragung einer Drehbewegung von der Antriebseinheit (59) auf die Kolbenstange (55).

18. Kombinationsgreifer (20) nach Anspruch 17, wobei das Getriebe (60) ein Zahnradgetriebe ist und die Kolbenstange (55) eine Aussenhülse (61) und eine Innenhülse (62) umfasst, welche gegenseitig in Längsrichtung zueinander verschiebbar sind, wobei das Greifelement (56) an der Aussenhülse (61) angeordnet ist, und wobei zur Übertragung der Drehbewegung von dem Zahnradgetriebe (60) auf die Kolbenstange (55) die Aussenhülse (61) in Umfangrichtung ein Zahnrad (63) aufweist, welches mit dem Zahnradgetriebe in Wirkverbindung steht oder bringbar ist.

19. Vorrichtung (70) zum Bestücken von Spritzgussteilen (1), insbesondere Pipettenspitzen, mit Filterelementen (71), insbesondere zur Verwendung in einem Verfahren nach einem der Ansprüche 1 bis 8, die Vorrichtung (70) umfassend eine Einpressvorrichtung (72) und eine Zentriervorrichtung (73), wobei
die Einpressvorrichtung (72)
- mehrere zueinander in Werkzeugordnung angeordnete Einpresshülsen (74), in denen jeweils ein Einpressdorn (75) in Längsrichtung der Einpresshülsen (74) bewegbar ist, umfasst,
und wobei die Zentriervorrichtung (73)
- mehrere zueinander in Werkzeugordnung angeordnete Einführhilfen (76) zur Fixierung der Spritzgussteile (1), insbesondere Pipettenspitzen, in einem Werkstückträger (10), insbesondere einem Werkstückträger (10) gemäss einem der Ansprüche 11 bis 15, und zur Führung der Einpresshülsen (74) in die Spritzgussteile (1),
- ein erstes Zentrierelement (77) zur Zentrierung mit einem Zentriermittel (18) des Werkstückträgers (10),
- ein zweites Zentrierelement (78) zur Zentrierung mit einem Zentriermittel (83) der Einpressvorrichtung (72), umfasst,
wobei die Einführhilfen (76), die Einpresshülsen (74) sowie die zu bestückenden Spritzgussteile (1) koaxial ausgerichtet oder ausrichtbar sind,
wobei die Einpresshülsen (74) an einer Hülsenhalteplatte (79) und die Einpressdorne (75) an einer Dornhalteplatte (80) angeordnet sind,
wobei die Hülsenhalteplatte (79) und die Dornhalteplatte (80) über einen in einem Zylinder (81) bewegbaren Kolben (82) miteinander verbunden sind, und
wobei eine Bewegung des Kolbens (82) eine Bewegung der Einpressdorne (75) in den Einpresshülsen (74) bewirkt.

20. Vorrichtung (90) zum Bereitstellen, Befüllen und Weiterleiten von Verpackungsbehältern (3), insbesondere von Pipettenspitzenhaltern, in einer Verpackungsvorrichtung (100), insbesondere zur Verwendung in einem Verfahren nach einem der Ansprüche 1 bis 8, die Vorrichtung (90) umfassend
- mindestens einen Pufferplatz (91) für leere Verpackungsbehälter (3),
- mindestens einen Befüllplatz (92) zur Befüllung jeweils eines Verpackungsbehälters (3) mit Spritzgussteilen (1),
- mindestens einen Pufferplatz (93) für befüllte Verpackungsbehälter (6),
wobei leere Verpackungsbehälter (3) durch eine erste Transporteinrichtung (41) bereitstellbar sind,
wobei befüllte Verpackungsbehälter (6) durch eine zweite Transporteinrichtung (42) einem nachgeordneten Abschnitt (96) der Verpackungsvorrichtung (100) zuführbar sind, und wobei die Verpackungsbehälter (3, 6) durch eine dritte Transporteinrichtung (43) von dem mindestens einen Pufferplatz (91) für leere Verpackungsbehälter (3) über den mindestens einen Befüllplatz (92) hin zu dem mindestens einen Pufferplatz (93) für befüllte Verpackungsbehälter bewegbar sind.

21. Vorrichtung (90) nach Anspruch 20, zusätzlich umfassend eine erste Umlenkeinrichtung (94), insbesondere eine über die erste Transporteinrichtung (41) ausschwenkbare Leitplanke, zum Umlenken von leeren Verpackungsbehältern (3) von der ersten Transporteinrichtung (41) auf den von der ersten Transporteinrichtung (41) aus gesehen ersten Pufferplatz (91) für leere Verpackungsbehälter (3) und/oder eine zweite Umlenkeinrichtung (94'), insbesondere eine über die zweite Transporteinrichtung (42) ausschwenkbare Leitplanke, zum Freigeben und/oder Umlenken von befüllten Verpackungsbehältern (6) von dem von der zweiten Transporteinrichtung (42) aus nächstliegenden Pufferplatz (93) für befüllte Verpackungsbehälter (6) auf die zweite Transporteinrichtung (42) .

22. Anlage (101) zur Herstellung und Verpackung von Pipettenspitzen (1), umfassend mindestens einen Kombinationsgreifer (20) gemäss einem der Ansprüche 16 bis 18 und/oder mindestens einen Werkstückträger (10) nach einem der Ansprüche 11 bis 15 sowie vorzugsweise mindestens eine Vorrichtung nach einem der Ansprüche 19 bis 21.
